# EUROPEAN PATENT SPECIFICATION

(11) **EP 2 448 769 B1**
(45) Date of publication and mention of the grant of the patent: **01.05.2013**
(21) Application number: 10736954.8
(22) Date of filing: 29.06.2010
(51) Int. Cl.: B60B 5/02, B29C 45/00

(54) **WHEEL OF POLYMERIC MATERIAL**
RAD AUS POLYMERMATERIAL
ROUE EN MATIÈRE POLYMÈRE

(30) Priority: 02.07.2009 BR PI0902289
(43) Date of publication of application: 09.05.2012
(73) Proprietor: Plascar Indústria De Componentes Plásticos LTDA, 13212-000 Jundiaí - São Paulo (BR)
(72) Inventor: SILVA, José Donizeti da, 13211-815 Jundiaí - SP (BR); TIRABOSCHI, Marcio, 13211-815 Jundiaí - SP (BR)
(74) Representative: Geyer, Fehners & Partner
(86) International application number: PCT/BR2010/000220
(87) International publication number: WO 2011/000070

(56) References cited:
- US-A- 4 511 184
- US-A- 4 900 097
- US-A- 5 277 479
- US-A- 5 282 673

## Description

### Field of the Invention

The present invention refers to a new construction for a tire wheel to be applied to several vehicles, such as cars, light and heavy utility vehicles, motorcycles, tricycles, quadricycles, vehicles for internal transportation of load and people, agricultural vehicles, and vehicles for other applications, said wheel being constructed in a thermoplastic composite material.

### Background of the Invention

As known in the prior art, the polymeric composite materials are those in which two or more materials are associated so as to attain a synergy of properties and performance optimization and, accordingly, to obtain characteristics that are superior to those of the unitary materials. Composite materials usually result from the association of a polymeric base with one or more reinforcing materials.

In industry, there is a remarkable demand for products which provide weight reduction, allied to property improvements, performance optimization and differentiated visual aspect provided by design freedom. Apart from these aspects, it is expected productivity increase, quality improvement, ecological appeal due to recyclability, comfort, safety, autonomy improvement, reduction of pollutant emissions, and the like.

The lightweight alloy wheels are manufactured in a cast single piece and the steel wheels are made of stamped rim and disc, requiring welding spots in which oxidation points may arise, impairing the durability and the safety of the product. Another aspect to be considered is the fact that the metallic materials have a higher specific weight than the polymeric materials, implying a larger mass for the wheel manufactured with such materials and, accordingly, a heavier vehicle and higher consumption of energy and/or fuel.

Besides the inconveniences above, these known wheels may present permanent deformation (plastic deformation) in case of impacts, causing serious or even permanent damages to the product and to the system associated therewith. Specifically, the process of casting the lightweight alloy wheels enhances the potential for failure due to the presence of porosity in the material, which is difficult to control and inherent to the manufacturing process. The subsequent machining step is a costly and lengthy process which generates many oil residues and waste metal. Moreover, upon analyzing the whole productive cycle of the wheel, there is a high consumption of electric energy, water and other inputs inherent to the casting process.

Attempts have been made to produce wheels in polymers reinforced with glass fibers through several processes and often using thermoset materials (not recyclable), which attempts failed in the validation tests or considered commercially unfeasible.

A prior art example is described in Patent US 4,900,097, which uses a disc inserted between the fixing bolts and the braking system, with the purpose of dissipating heat. In this construction, the disc may separate from the plastic rim.

Patent US 3,811,737 suggests using metal plates to avoid the bolts from being excessively tightened in the resin that has low resistance to compression.

Patent US 3,917,352 presents several continuous glass fiber filaments to reinforce the plastic structure, but the manufacturing process is expensive and crafty, making the final product economically unfeasible or poorly competitive.

In patent US 4,072,358, the wheel is molded in a process of compressing Polyamide (PI) sheets with cut glass fibers.

Patent US 5,826,948 presents a wheel produced in two pieces that are bonded to each other, requiring two injection molds, which raises the production cost.

US 5,277,479 that forms the closest prior art document according to the preamble of claim 1, discloses a one piece type resin wheel comprising a rim and a disk integrally molded together as one unit, said disk having an axle hole and an area extending from the axle hole to said rim, said area being in a form of blind plate without holes, said wheel being formed of a mixture of thermoplastic resin, a long-fiber reinforced thermoplastic resin, and a short-fiber reinforced thermoplastic resin by one of injection molding and injection compression molding methods, a length of said short-fibers being 1 to 30 mm, a length of said short-fibers being 0.1 to 0.5 mm, and a blending amount of the fibers to the resin being between 5 and 70 % by volume and a mixing ratio of said short-fiber reinforced resin being less than 70% by weight of a total amount.

US 5,282,673 discloses a compound resin wheel comprising at least two moldings integrated together to form at least a part of the resin wheel, at least one of the moldings being made of a long fiber reinforced thermoplastic resin, and the other molding being made of one of metal and fiber reinforced plastic, the moldings having fitting portions provided with screw threads thereon for integrating the moldings by screwing and ratchet teeth on the screw threads to allow the moldings to turn in a tightening direction but prevent the moldings from turning in a loosening direction, thereby increasing the strength of the resin wheel.

US 4,900,097 discloses a car wheel made of engineering polymer material, comprising a rim which has a shaped well on which a tire is adapted to be mounted, the wheel including a disc which has a hub portion, the hub portion being provided with holes for receiving fixing components, and heat insulting plate means mounted between the disc and a car hub, wherein in the region of each hole for each fixing component there are disposed a pair of supporting plates and a plurality of pins disposed between each pair of supporting plates and made of steel having a high limit of elasticity, each pin having a pair of opposite end faces, the opposite end faces of said pins being in contact with said pair of supporting plates which are disposed on opposite sides of the hub portion, and the coefficient of linear expansion of the pins being equal to that of the fixing components.

US 4,511,184 discloses a process for producing an injection molded unitary wheel having an even number of spokes interconnecting a rim and hub, the process comprising the steps of providing a wheel mold having rim and hub forming portions and an even number of spoke forming portions, locating one injection point in each of some of the spoke forming portions of the mold, separating the spoke forming portions of the mold having injection points from each other by an odd number of intermediary spoke forming mold portions without injection points, and injecting a melt stream into each of the injection points whereby all of the streams meet and coalesce in the intermediary spoke forming mold portions.

Patent US 5,268,139 discloses a design to avoid the knit lines of different polymer flow lines in weaker regions, which is a great limitation to the design freedom of the wheel and to the adaptation of its plastic form to each design requirement.

The known vehicular wheels formed in plastic material are generally obtained from polymeric materials whose composition presents deficiencies regarding its structural resistance, resistance to weather conditions, aging, capability of withstanding great tightening and retaining forces in the shaft ends in which the wheels are mounted, and also concerning the complexity in manufacturing and adapting its structural design to the aesthetic and functional requirements in each application.

### Summary of the Invention

In face of the deficiencies presented by the vehicular wheels for pneumatic tires known so far, it is an object of the present invention to provide a wheel in polymeric material, which is relatively simple to manufacture and has a high design flexibility, further presenting high resistance to tension, compression, bending and impact, and guaranteeing a long useful life even when submitted to weather conditions and chemical attacks during its use in a vehicle.

These positive properties are obtained with the wheel according to claim 1. The wheel is of the type comprising a body formed: by a median disc provided with a central hole, to be mounted in a shaft end of a vehicle, and a plurality of eccentric holes for the passage of fixing bolts; and by a peripheral ring configured to retain a vehicle tire. The wheel considered herein is injected, in a single piece, from a novel polymeric composition which comprises, in a homogeneous mixture, from 40% to 70% of a thermoplastic polymeric matrix, preferably a polyamide (PA), from 30% to 60% of synthetic fibers and from 0.01% to 10% of additives.

Besides the structural and functional characteristics of the novel wheel, it should be understood that the manufacture of the wheel body by injection allows reducing the production cycle, reducing costs and making the product economically feasible.

The development of the product, both in aesthetic (design) and functional terms, is allied to computational simulations, such as structural analysis, fatigue and conformation, by using softwares for Finite Element Analysis (FEA); interaction analysis between design/product/material/process and tooling; and simulations of physical bench tests, which accelerate the analysis of the product's performance, avoiding trial and error.

Such simulations reduce the time and the costs involved in the steps of conception, development and validation of the product. Finally, the laboratory and fatigue tests, associated with durability and field tests, allow homologating a product which complies with the specific application requirements. However, due to the lack of specific national and international rules and regulations for this type of product in polymeric composite material, the performance evaluation was conducted based on the SAE, ISO and NBR (Brazilian rule) specifications and regulations applied to the current products commonly manufactured in metal materials and their alloys. Another important point is that the vehicles do not need to be modified to receive the wheel of the present invention.

### Brief Description of the Drawings

The invention will be described below, with reference to the enclosed drawings, given by way of illustration of a possible embodiment for the present wheel and in which:
Figure 1 represents a partially sectioned perspective view of a wheel construction deprived of inserts;
Figure 2 represents a partially sectioned perspective view of a wheel construction provided with an insert, in a metallic alloy, affixed in the interior of the central hole of the median disc, so as to coat said central hole along its whole axial extension;
Figure 3 represents a perspective view similar to that of figure 2, but illustrating the eccentric holes of the median disc internally coated, along the whole axial extension thereof, by an insert in metallic alloy;
Figure 4 represents a perspective view similar to that of figure 3, but illustrating the eccentric holes of the median disc internally coated, in only part of their axial extension, by an insert;
Figure 5 represents a perspective view similar to that of figures 2 and 4, with the central hole internally coated in its whole axial extension, and with the eccentric holes internally coated in only part of their whole axial extension, by a respective insert in metallic alloy; and
Figure 6 represents a perspective view similar to that of figure 5, but illustrating a construction in which the insert of the central hole and the inserts of the eccentric holes form a single piece, onto which it is injected the polymeric material that forms the wheel body.

### Description of the Invention

As already mentioned and illustrated in the enclosed drawings, the present wheel is of the type which comprises a body C formed by a median disc 10, provided with a central hole 11, to be mounted to a shaft end of a vehicle, and a plurality of eccentric holes 12 for the passage of fixing bolts; and by a peripheral ring 20 configured to retain a vehicle tire. In the illustrated constructive form, the central hole 11 presents a generally cylindrical and axially innermost mounting portion 11a which is mounted around a respective shaft end of the vehicle. On the other hand, the eccentric holes 12 present an axially innermost cylindrical portion 12a to act as a guide for the body of the bolts which affix the wheel to the vehicle, and an axially outermost frusto-conical portion 12b, in which interior there is housed the conical region of the hexagonal bolt or nut operatively associated with the fastening bolt or nut of the wheel.

According to the invention, the body C is injected, in a single piece, in a polymeric composite material comprising, in a homogeneous mixture: from 40% to 70% of a thermoplastic polymeric matrix, from 30% to 60% of synthetic fibers; and from 0.01% to 10% of additives. Preferably, the polymeric matrix is obtained in polyamide (PA) and the synthetic fibers are defined by fine flexible filaments of long glass fibers with high resistance to tension, bending and impact.

Furthermore, the preferred additives for forming the body C of the wheel are defined by compatibilization agents, aging retardants, thermal stabilizers, UV additives/absorbers, flame retardants, process aids, primary and secondary antioxidants and pigments. The wheel comprises reinforcing elements, constructed in metallic alloy and which take the form of inserts 30, 40 positioned only in the interior of the central hole 11 or of the eccentric holes 12, or even in both the central hole 11 and eccentric holes 12, so as to impart a higher structural resistance to the parts of the body C submitted to direct contact with the shaft end of the vehicle or with the bolts for fastening the wheel to the vehicle.

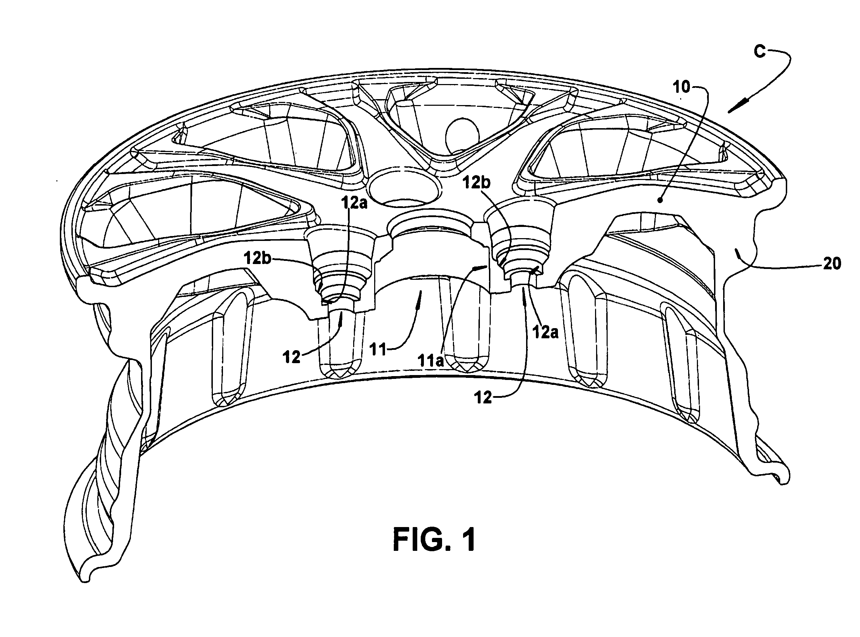

In the construction illustrated in figure 1, the body C is deprived of the inserts 30, 40.

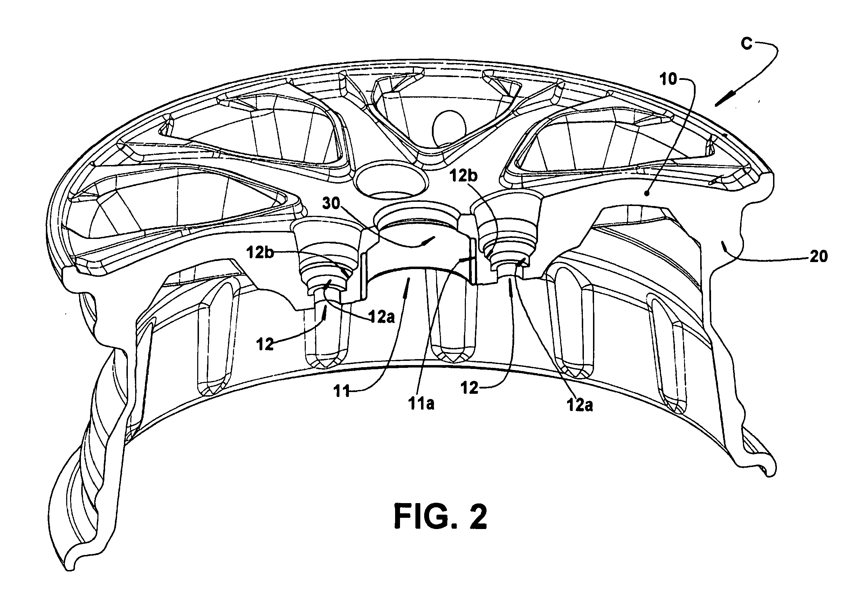

In the construction illustrated in figure 2, only the mounting portion 11a of the central hole 11 is internally coated by a respective insert 30. It should be understood that this insert 30 may be extended through the whole axial extension of said mounting portion 11a of the central hole 11, or only through part of said extension.

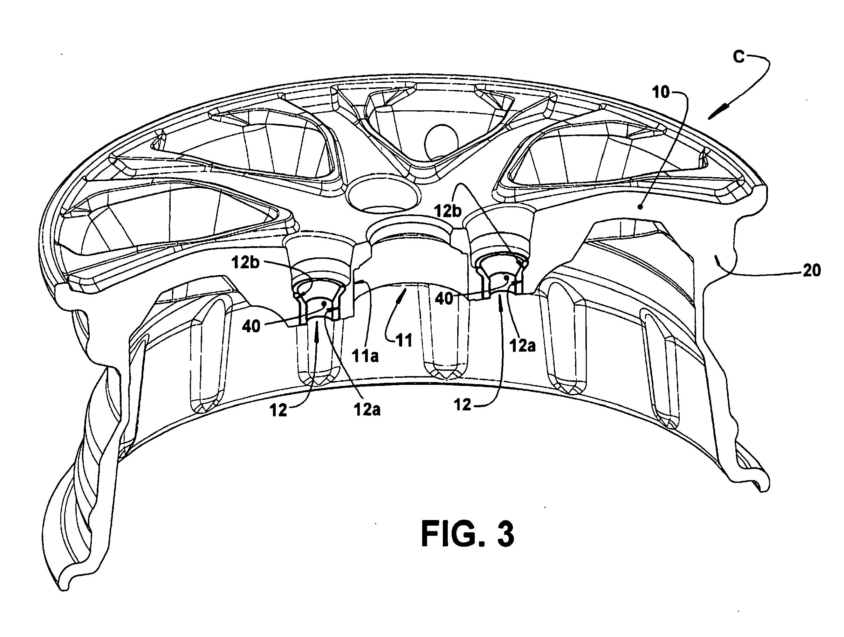

In the construction of figure 3, only the eccentric holes 12 are internally coated by respective tubular inserts 40. In this figure, both the cylindrical portion 12a and the frusto-conical portion 12b of each eccentric hole 12 are internally and entirely coated by a respective insert 40, whose shape accompanies the form of said eccentric hole portions.

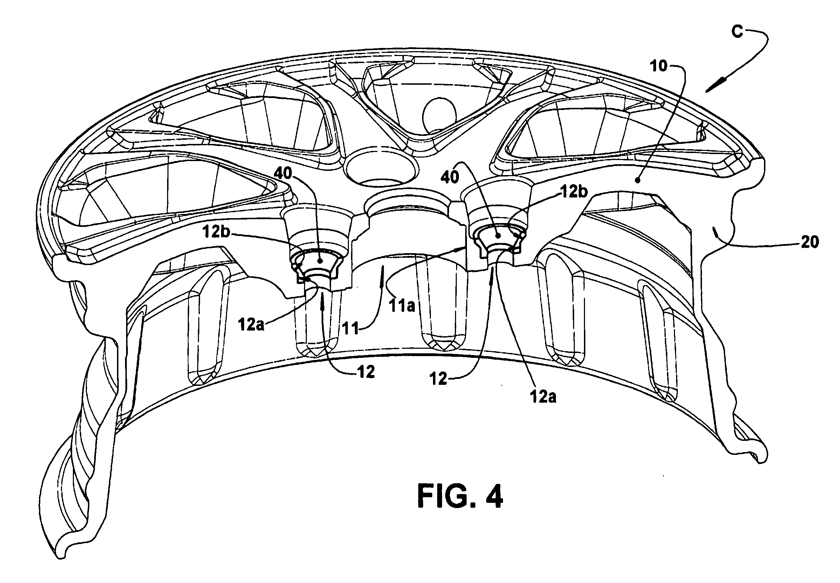

Figure 4 illustrates a constructive variant of figure 3, in which the metal insert 40 internally coats the whole frusto-conical portion 12b of a respective eccentric hole 12, but only the adjacent region of the cylindrical portion 12a of said eccentric hole.

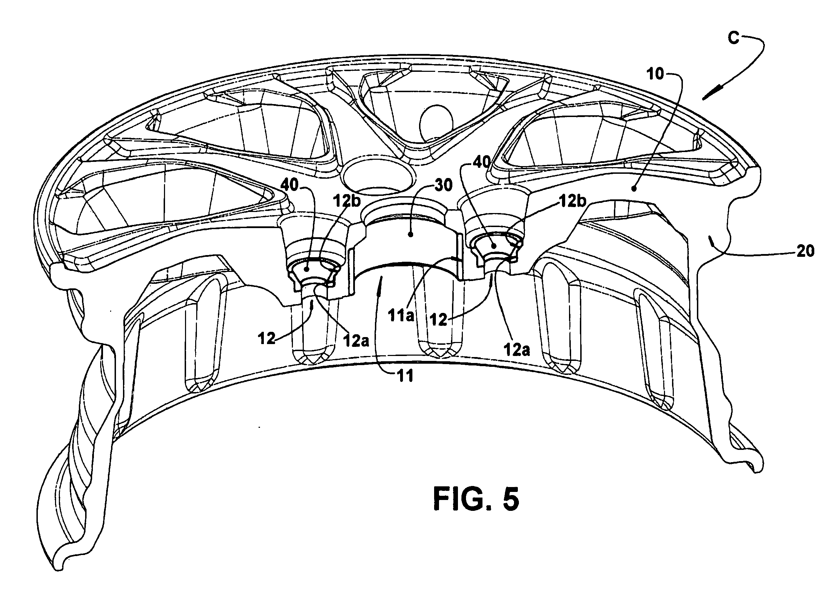

Figure 5 represents a construction in which the central hole 11 has the entire axial extension of its mounting portion 11a coated by an insert 30, whilst the eccentric holes 12 have only part of their axial extension coated by a respective insert 40, as illustrated in figure 4.

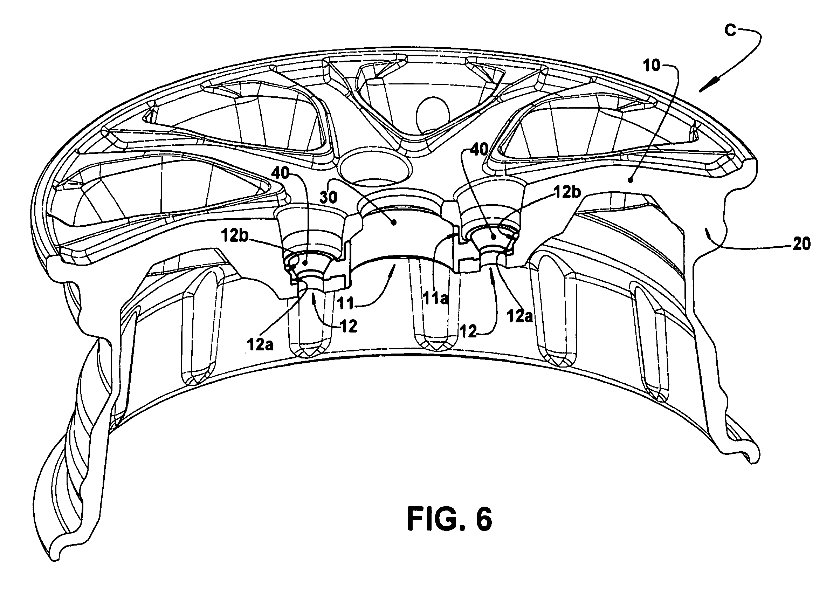

Figure 6 represents a construction which encompasses the aspects defined in the solution of figure 5, but in which all the inserts 40 of the eccentric holes 12 are joined, in a single piece, to the insert 30 which coats the mounting portion 11a of the central hole 11. It should be understood that the construction of figures 5 and 6 may also contemplate the use of tubular insert 40, occupying the entire axial extension of the respective eccentric holes 12.

The metallic inserts 30, 40, are over-injected, being positioned in the mold before the injection of the composite material which involves these elements and guarantees their positioning and mechanical fixation; or mounted, subsequently to the injection process, by interference through a proper device in which the force and the displacement of the insertion are monitored. The mechanical fixation is promoted by interference defined by the difference between the diameter of the hole portions 11a, 12a, 12b and the outer diameter of the metallic insert, associated with the tapering effect of the insert and of the product, which is the case of the inserts 40 of the eccentric holes 12, as well as by the configuration of a knurling applied on the outer wall of these inserts. The requirements and configuration of each product will determine which process is the most recommended for each type of insert.

The construction described above allows the wheel to be produced as a single element (and not in modules to be joined posteriorly) and it can include inserts, in metallic alloy, in the mounting region to the vehicle, if necessary or required by the project, in order to prevent the tension relaxation effect which eventually can make the fixation bolts/nuts lose their torque.

The formation of said wheels is carried out by thermoplastic injection molding, which permits a higher precision, repeatability, as well as a higher productivity, allowing obtaining a single piece, with great design freedom and by using recyclable material.

Virtual analyses (virtual simulations) and physical laboratory tests, according to SAE, ISO and NBR rules, led to positive results which, in some cases, were superior to those traditionally found in wheels produced in metal alloys. The success of such results is attributed to the design and construction of the body C, combined with the correct choice of the polymeric composite which has mechanical properties, such as, for example, resistance to tension regarding yield/rupture, superior to the commonly used alloys, which imparts to the product a high absorption of energy (elastic deformation) without the occurrence of denting (plastic deformation). Moreover, there were identified reductions of weight from about 20% to 40% and 30% to 50%, as compared to the lightweight alloy wheels and steel wheels, respectively.

## Claims

1. A wheel of polymeric material, of the type which comprises a body (C) formed by a median disc (10) provided with a central hole (11), to be mounted to a shaft end of a vehicle, and a plurality of eccentric holes (12) for the passage of fixing bolts and by a peripheral ring (20) configured to retain a vehicle tire, wherein said wheel has its body (C) injected, in a single piece, in a polymeric composite material comprising, in a homogeneous mixture, from 40% to 70% of a thermoplastic polymeric matrix, from 30% to 60% of synthetic fibers and from 0.01% to 10% of additives, wherein the central hole (11) presents an axially innermost mounting portion (11 a), and its eccentric holes (12) present an axially innermost cylindrical portion (12a), and an axially outermost frusto-conical portion (12b), wherein at least one of the parts defined by the mounting portion (11a) of the central hole (11) and by the eccentric holes (12) is internally coated, in at least part of its axial extension, by a respective insert (30, 40) in metallic alloy, which is axially and radially affixed to the median disc (10) of the body (C) of the wheel, **characterized in that** all the inserts (40) of the eccentric holes (12) are joined, in a single piece, to the tubular insert (30) which coats the mounting portion (11a) of the central hole (11).

2. The wheel as set forth in claim 1, **characterized in that** the thermoplastic polymeric matrix is a polyamide (PA).

3. The wheel as set forth in claim 2, **characterized in that** the additives are defined by at least one of the components defined by: compatibilization agents, aging retardants, thermal stabilizers, UV absorbers, flame retardants, process aids, primary and secondary antioxidants and pigments.

4. The wheel as set forth in claim 1, **characterized in that** the polymeric composite material which forms the body (C) of the wheel is molded around at least one insert (30, 40).

5. The wheel as set forth in claim 1, **characterized in that** it has at least one insert (30, 40) in the respective central hole (11) or eccentric hole (12) of the median disc (10) of the body (C).

6. The wheel as set forth in any of claims 1, 4 or 5, **characterized in that** only the frusto-conical portion (12b) and the adjacent region of the cylindrical portion (12a) of the eccentric holes (12) are internally coated by a respective insert (40).

## Patentansprüche

1. Rad aus polymerem Material, von der Art, umfassend einen Körper (C), gebildet durch eine mittlere Scheibe (10), ausgestattet mit einem zentralen Loch (11), um an das Wellenende eines Fahrzeugs angebracht zu werden, und einer Vielzahl von exzentrischen Löchern (12) für den Durchgang von Befestigungsbolzen und durch einen peripheren Ring (20), konfiguriert um einen Fahrzeugreifen zu halten, wobei der Körper des Rads in einem einzigen Stück eingespritzt ist in ein polymeres Verbundmaterial, umfassend, in einer homogenen Mischung, von 40 % bis 70 % einer thermoplastischen polymeren Matrix, von 30 % bis 60 % synthetische Fasern und von 0,01 % bis 10 % Additive, wobei das zentrale Loch (11) einen axial innersten Befestigungsabschnitt (11a) aufweist und dessen exzentrische Löcher (12) einen axial innersten zylindrischen Abschnitt (12a) und einen axial äußersten kegelstumpfförmigen Abschnitt (12b) aufweisen, wobei wenigstens eines der Teile, definiert durch den Befestigungsabschnitt (11a) des zentralen Lochs (11) und durch die exzentrischen Löcher (12), innen beschichtet ist, in mindestens einem Teil seiner axialen Erstreckung, durch einen jeweiligen Einsatz (30, 40) in metallischer Legierung, der axial und radial an der mittleren Scheibe (10) des Körpers (C) des Rades befestigt ist, **dadurch gekennzeichnet, daß** sämtliche Einsätze (40) der exzentrischen Löcher (12) miteinander verbunden sind, in einem einzigen Stück, mit dem röhrenförmigen Einsatz (30), der den Befestigungsabschnitt (11a) des zentralen Lochs (11) beschichtet.

2. Rad nach Anspruch 1, **dadurch gekennzeichnet, daß** die thermoplastische polymere Matrix ein Polyamid (PA) ist.

3. Rad nach Anspruch 2, **dadurch gekennzeichnet, daß** die Additive definiert sind durch mindestens eine der Komponenten, definiert durch Kompatibilisierungs-Agentien, Alterungsverzögerer, thermische Stabilisatoren, UV-Absorber, Flammenschutzmittel, Verarbeitungshilfsmittel, primäre und sekundäre Antioxidantien und Pigmente.

4. Rad nach Anspruch 1, **dadurch gekennzeichnet, daß** das polymere Verbundmaterial, das den Körper (C) des Rads bildet, um mindestens einen Einsatz (30, 40) geformt ist.

5. Rad nach Anspruch 1, **dadurch gekennzeichnet, daß** es mindestens einen Einsatz (30, 40) in dem jeweiligen zentralen Loch (11) oder exzentrischen Loch (12) der mittleren Scheibe (10) des Körpers (C) hat.

6. Rad nach einem der Ansprüche 1, 4 oder 5, **dadurch gekennzeichnet, daß** nur der kegelstumpfförmige Abschnitt (12b) und der angrenzende Bereich des zylindrischen Abschnitts (12a) des exzentrischen Lochs (12) innen durch einen jeweiligen Einsatz (40) beschichtet sind.

## Revendications

1. Roue de matériau polymère, du type qui comprend un corps (C) formé par un disque médian (10) pourvu d'un trou central (11), à monter sur une extrémité d'arbre d'un véhicule, et d'une pluralité de trous excentriques (12) pour le passage de boulons de fixation, et par une bague périphérique (20) configurée pour retenir un pneu du véhicule, dans laquelle ladite roue a son corps (C) qui est injecté d'une seule pièce dans un matériau polymère composite comprenant, en mélange homogène, 40 à 70 % d'une matrice polymère thermoplastique, 30 % à 60 % de fibres synthétiques et 0,01 % à 10 % d'additifs, dans laquelle le trou central (11) présente une portion de montage (11a) axialement le plus à l'intérieur, et ses trous excentriques (12) présentent une portion cylindrique (12a) située axialement le plus à l'intérieur, et une portion tronconique (12b) située axialement le plus à l'extérieur, dans laquelle au moins l'une des parties définies par la portion de montage (11a) du trou central (11) et par les trous excentriques (12) est revêtue intérieurement, sur au moins une partie de son extension axiale, par une pièce rapportée respective (30, 40) en alliage métallique, qui est fixée axialement et radialement au disque médian (10) du corps (C) de la roue, **caractérisée en ce que** toutes les pièces rapportées (40) des trous excentriques (12) sont jointes, d'une seul tenant, à la pièce rapportée tubulaire (30) qui revêt la portion de montage (11a) du trou central (11).

2. Roue selon la revendication 1, **caractérisée en ce que** la matrice polymère thermoplastique est un polyamide (PA).

3. Roue selon la revendication 2, **caractérisée en ce que** les additifs sont définis par au moins l'un des composants définis par : des agents de compatibilisation, des agents retardateurs de vieillissement, des stabilisateurs thermiques, des absorbeurs d'UV, des retardateurs de flamme, des auxiliaires de traitement, des antioxydants primaires et secondaires et des pigments.

4. Roue selon la revendication 1, **caractérisée en ce que** le matériau composite polymère qui forme le corps (C) de la roue est moulé autour d'au moins une pièce rapportée (30, 40).

5. Roue selon la revendication 1, **caractérisée en ce qu'**elle possède au moins une pièce rapportée (30, 40) dans le trou central respectif (11) ou dans le trou excentrique (12) du disque médian (15) du corps (C).

6. Roue selon l'une quelconque des revendications 1, 4 ou 5, **caractérisée en ce que** seules la portion tronconique (12b) et la région adjacente de la portion cylindrique (12a) des trous excentriques (12) sont revêtues intérieurement d'une pièce rapportée respective (40).
